# EUROPEAN PATENT APPLICATION

(11) **EP 4 241 577 A1**
(43) Date of publication of application: **13.09.2023**
(21) Application number: 21877438.8
(22) Date of filing: 29.09.2021
(51) Int. Cl.: A23L 23/10, A23D 9/00

(54) **OIL AND FAT COMPOSITION FOR ROUX**

(30) Priority: 05.10.2020 JP 2020168661
(71) Applicant: Fuji Oil Holdings Inc., Izumisano-shi, Osaka 598-8540 (JP)
(72) Inventor: MATSUOKA, Mai, Izumisano-shi, Osaka 598-8540 (JP)
(74) Representative: Becker, Eberhard
(86) International application number: PCT/JP2021/035796
(87) International publication number: WO 2022/075137

(57) **Abstract**

The present invention addresses the problem of providing a processed food that is produced from a roux using a plant oil and fat in a raw material for an oil and fat composition for roux, and that has a flavor similar to when pork fat or beef fat is used in a raw material for an oil and fat composition for roux. A solution to the problem is an oil and fat composition that is for roux and that uses shea fat as a raw material.

## Description

### [Technical Field]

The present invention relates to an oil and fat composition for roux.

### [Background Art]

Roux used for making processed foods such as curry, hashed rice, and stew is produced by heating and mixing seasonings such as spices, cereal flour such as wheat flour, and edible oils and fats.

In a roux oil and fat composition used for roux, hydrogenated oils made from pork fat or beef fat or mixed oils thereof, or hydrogenated oils of plant oils and fats such as a palm oil, transesterified oils, or mixed oils thereof are used.

As a method of improving the flavor of processed foods such as curry, hashed rice, and stew, Patent Literature 1 discloses a method of adding a hydrogen reduction product of an oxide, and Patent Literature 2 discloses a method of using a roasted rapeseed oil.

### [Citation List]

### [Patent Literature]

[Patent Literature 1]
   Japanese Patent Laid-Open No. 2018-130052
[Patent Literature 2]
   Japanese Patent Laid-Open No. 2012-217408
[Patent Literature 3]
   Japanese Patent Laid-Open No. S52-063206
[Patent Literature 4]
   Japanese Translation of PCT Application No. 2015-533482
[Patent Literature 5]
   Japanese Patent Laid-Open No. 2001-98293

### [Summary of Invention]

### [Technical Problem]

The inventors investigated the difference in flavor of roux containing seasonings such as spices, and cereal flour such as wheat flour and used for processed foods such as curry, hashed rice, stew and soup depending on the type of oils and fats of the oil and fat composition for roux.

Among these, particularly, in roux used for processed foods such as curry and hashed rice, when plant oils and fats such as a palm oil are used as the raw material for the oil and fat composition for roux, the flavor is different from when pork fat or beef fat is used as the raw material for the oil and fat composition for roux.

Here, an objective of the present invention is to make a flavor of processed food made from roux using plant oils and fats as a raw material for an oil and fat composition for roux similar to that when pork fat or beef fat is used as a raw material for an oil and fat composition for roux.

### [Solution to Problem]

In view of the above circumstances, the inventors conducted extensive studies, and as a result, found usage of a shea fat as a raw material for an oil and fat composition for roux, and completed the present invention.

Specifically, the present invention provides
(1) An oil and fat composition for roux containing 25 to 100 mass% of a shea fat having an iodine value of 50 to 80,
(2) The oil and fat composition for roux according to (1), which is flavored with rice bran,
(3) The oil and fat composition for roux according to (1), which contains oils and fats flavored with rice bran,
(4) The oil and fat composition for roux according to (1), which contains 0.01 to 1 mass% of an aqueous phase containing 0.2 to 40 mass% of a yeast extract and 0.2 to 60 mass% of a reducing sugar together,
(5) The oil and fat composition for roux according to (2), which contains 0.01 to 1 mass% of an aqueous phase containing 0.2 to 40 mass% of a yeast extract and 0.2 to 60 mass% of a reducing sugar together,
(6) The oil and fat composition for roux according to (3), which contains 0.01 to 1 mass% of an aqueous phase containing 0.2 to 40 mass% of a yeast extract and 0.2 to 60 mass% of a reducing sugar together,
(7) An oil and fat composition for roux containing 25 to 100 mass% of a shea fat having an iodine value of 30 to 50,
(8) The oil and fat composition for roux according to (7), which is flavored with rice bran,
(9) The oil and fat composition for roux according to (7), which contains oils and fats flavored with rice bran,
(10) The oil and fat composition for roux according to any one of (7) to (9), which contains 0.01 to 1 mass% of an aqueous phase containing 0.2 to 40 mass% of a yeast extract and 0.2 to 60 mass% of a reducing sugar together,
(11) A roux containing the oil and fat composition for roux according to any one of (1) to (6), a seasoning and cereal flour,
(12) A roux containing the oil and fat composition for roux according to any one of (7) to (10), a seasoning and cereal flour,
(13) The roux according to (11), which is for curry,
(14) The roux according to (12), which is for curry,
(15) A processed food using the roux according to (11),
(16) A processed food using the roux according to (12),
(17) A processed food using the roux according to (13),
(18) A processed food using the roux according to (14),
(19) A method of enhancing processed food to have a full-bodied taste using the roux according to (11),
(20) A method of enhancing processed food to have a full-bodied taste using the roux according to (12),
(21) A method of enhancing processed food to have a full-bodied taste using the roux according to (13),
(22) A method of enhancing processed food to have a full-bodied taste using the roux according to (14).

### [Advantageous Effects of Invention]

Processed foods made from roux using an oil and fat composition for roux of the present invention can have a flavor similar to when pork fat or beef fat is used as the raw material for the oil and fat composition for roux. It is possible to appropriately reduce the amount of pork fat or beef fat added. More preferably, the amount of pork fat or beef fat added is 20 mass% or less of the total oils and fats contained in the roux, and more preferably, a favorable flavor can be obtained without adding pork fat or beef fat.

In a preferable embodiment, in roux used for processed foods such as curry, hashed rice, and stew, processed foods made from roux using an oil and fat composition for roux of the present invention can have a flavor similar to when pork fat or beef fat is used as the raw material for the oil and fat composition for roux. It is possible to appropriately reduce the amount of pork fat or beef fat added. More preferably, the amount of pork fat or beef fat added is 20 mass% or less of the total oils and fats contained in the roux, and more preferably, a favorable flavor can be obtained without adding pork fat or beef fat.

In a more preferable embodiment, in roux used for curry, when an oil and fat composition for roux of the present invention is used, it is possible to obtain a flavor similar to when pork fat or beef fat is used as the raw material for the oil and fat composition for roux. It is possible to appropriately reduce the amount of pork fat or beef fat added. More preferably, the amount of pork fat or beef fat added is 20 mass% or less of the total oils and fats contained in the roux, and more preferably, a favorable flavor can be obtained without adding pork fat or beef fat.

### [Description of Embodiments]

An oil and fat composition for roux of the present invention contains 25 to 100 mass%, preferably 50 to 100 mass%, and more preferably 70 to 100 mass% of a shea fat. If it is less than 25 mass%, sufficient effects may not be exhibited.

A shea fat is a generic term for oils and fats obtained from the seeds of *Vitellaria paradoxa* (*Butyrospermum parkii*), which grows in the area commonly known as the Shea Belt in north-central Africa. A shea fat is a solid at room temperature, and is sometimes used without changing physical properties, but in order to improve the function of a solid part as substitute oils and fats for cacao butter, it is often used after fractionating the solid part and the liquid part. The solid side obtained by fractionation is used as substitute oils and fats for cacao butter and also often used in order to improve the function of chocolate such as preventing so-called fat bloom in which the surface of chocolate products turns white and the inside becomes powdery, taking advantage of its excellent characteristics, and is mainly used for chocolate products (Patent Literature 3 to 5).

As described above, there are various processed oils and fats for shea fats such as a solid part and a liquid part depending on applications, but in the present invention, such processed oils and fats of shea fats can be used without limitation.

It is preferable to use a shea fat having an iodine value of 30 to 80, it is more preferable to use a shea fat having an iodine value of 35 to 80, it is still more preferable to use a shea fat having an iodine value of 50 to 80, and it is yet more preferable to use a shea fat having an iodine value of 60 to 80, which is preferable in order to obtain a flavor suitable for processed foods.

The oil and fat composition for roux of the present invention may contain a shea fat, but oils and fats other than a shea fat may be used. Examples of oils and fats that can be used other than a shea fat include plant oils and fats such as soybean oil, rapeseed oil, corn oil, cottonseed oil, peanut oil, sunflower oil, rice bran oil, safflower oil, olive oil, sesame oil, palm oil, coconut oil, and palm kernel oil, medium chain triglyceride-binding oils and fats (MCT). animal fats such as milk fat, beef fat, and pork fat, and their hydrogenated oils, fractionated oils, hydrogenated fractionated oils, fractionated hydrogenated oils, and processed oils and fats obtained by transesterification or the like, and mixed oils and fats thereof.

In the oil and fat composition for roux of the present invention, preferably, only plant oils and fats are used, and the composition contains no pork fat and/or beef fat, and an oil and fat composition for roux containing no animal oils and fats is more preferable. As described above, a flavor suitable for roux can be obtained with only the plant oils and fats.

In a preferable embodiment of the oil and fat composition for roux of the present invention, flavoring with rice bran can be performed.

Similarly, the inclusion of oils and fats flavored with rice bran can reinforce the depth of taste of processed foods made from roux using the oil and fat composition for roux, and can improve the flavor.

Flavoring with a rice bran method will be exemplified. Rice bran is immersed and heated at 140 to 180°C under a reduced pressure at a degree of vacuum of 60 mmHg (60 Torr) or less, and solid components are then removed to obtain a flavor oil. Particularly, it is preferable to perform a treatment after purification.

As is well known, rice bran is obtained when brown rice is polished, and contains the pericarp, seed coat, and aleurone layer, but it is rich in fat, protein, and vitamin B1, and contains various other components such as starch, pantoates, phytin (phosphorus compound), and nukain (glycoside). The flavor of such rice bran itself is poor and changes easily during storage, which is significant when the air temperature is high and the humidity is high. This is because the acid value of the fat increases due to a lipase action in rice bran, and in the present invention, it is preferable to use rice bran having a low acid value, and for example, it is preferable to use rice bran having a free fatty acid content of about 5% or less (in terms of oleic acid). In addition, such rice bran may be heated at about 110°C for about 2 hours to inactivate hydrolytic enzymes and then heated at 150 to 200°C, and the result may be used as rice bran.

For the amount of rice bran used, when its addition amount is 3 mass% or more with respect to the amount of oils and fats, effective results are obtained in many cases.

In addition, when the flavor is emphasized, it is common to add 5 mass% or more with respect to the amount of oils and fats, but it is also possible to add 10 mass% or more to make a concentrated flavor, which can be appropriately diluted in oils and fats during usage.

In addition, about 10 mass% of glucose may be added to the rice bran at the same time.

The oils and fats to which the rice bran is added are heated and stirred under a reduced pressure. For conditions, it is necessary to perform pressure reduction at a degree of vacuum of 60 mmHg (60 Torr) or less. When the degree of vacuum exceeds 60 mmHg, the oxidation stability tends to deteriorate.

In addition, it is necessary to heat at 140 to 180°C, and if the temperature is less than the lower limit, a fishy taste is perceived, and on the other hand, if the temperature exceeds the upper limit, a burning odor is perceived. Here, the heating time is generally about 2 hours, but the length of the time does not have much effect.

Rice bran is roasted by heating and has a very favorable and characteristic flavor.

At the same time, flavor components of rice bran and other effective components are eluted into oils and fats.

Next, the reaction product subjected to heating and stirring treatments is cooled and separated into oils and fats and solid components by a conventionally known fractionation method such as filtration, centrifugation, or decantation, and thus it is possible to obtain the oils and fats flavored with rice bran.

In another preferable embodiment of the oil and fat composition for roux of the present invention, when it contains an aqueous phase containing a yeast extract and a reducing sugar together, it is possible to reinforce the full-bodied taste in the middle stage of processed foods made from roux using the oil and fat composition for roux and enhance the flavor.

In such another preferable embodiment, it is necessary for the aqueous phase to contain a yeast extract and a reducing sugar together. "Containing together" means that a yeast extract and a reducing sugar coexist in each of individual aqueous phases dispersed in the oil phase, which is the continuous phase. Thereby, when the aqueous phase is heated, the Maillard reaction occurs efficiently, which contributes to the expression of flavor.

The amount of the yeast extract in the aqueous phase is desirably 0.2 to 40 mass%, more desirably 5 to 30 mass%, and still more desirably 10 to 25 mass%. In addition, the amount of reducing sugar in the aqueous phase is desirably 0.2 to 60 mass%, more desirably 5 to 50 mass%, and still more desirably 10 to 40 mass%. When the aqueous phase contains appropriate amounts of a yeast extract and a reducing sugar together, the flavor is efficiently expressed when heated.

In addition, the amount of the aqueous phase can be appropriately set. This is because the strength of the flavor required differs depending on the type of food, and when the amount of the aqueous phase is adjusted, it is possible to adjust the strength of the flavor. However, if the amount of the aqueous phase is still too large, it may cause sputtering when used as a substitute for general oils and fats, and the amount of the aqueous phase is desirably 0.01 to 1 mass%, more desirably 0.02 to 0.5 mass%, and still more desirably 0.04 to 0.3 mass%. Since the amount of the aqueous phase is appropriate, it is possible to use the oil and fat composition according to the present invention as a substitute for general oils and fats.

As the reducing sugar used in the aqueous phase, in addition to disaccharides such as lactose and maltose, any one or more of monosaccharides such as glucose and xylose can be used, one or more selected from among xylose, glucose, and fructose are more desirable, and xylose is still more desirable. When an appropriate reducing sugar is used, a favorable flavor is expressed.

A method of preparing a form containing an aqueous phase containing a yeast extract and a reducing sugar together is exemplified.

First, an aqueous phase and an oil phase are each prepared. Here, the aqueous phase is a mixture of water and water-soluble raw materials among raw materials for the oil and fat composition for roux according to the present invention. In addition, the oil phase is a mixture of oils and fats and raw materials that dissolve in oils and fats.

As an example, a reducing sugar and a yeast extract are dissolved in water to prepare an aqueous phase. In addition, an oil-soluble emulsifier is dissolved in oils and fats as necessary to prepare an oil phase.

Here, in the present invention, any commercially available yeast extract can be used regardless of the type.

The prepared aqueous phase and oil phase are mixed and emulsified in a water-in-oil type. In this case, the aqueous phase can be added dropwise into the stirred oil phase and emulsified in a water-in-oil type. Then, fine emulsification is additionally performed using an emulsification machine. Various devices can be used as the emulsification machine used, and examples thereof include high pressure homogenizers and ultrasonic emulsification machines.

Thereby, the oil and fat composition for roux containing the aqueous phase containing a yeast extract and a reducing sugar together is completed. When the product is heated, a better flavor can be expressed.

Roux used for making processed foods such as curry, hashed rice, and stew is produced by heating and mixing seasonings such as spices, cereal flour such as wheat flour, and edible oils and fats. Solid roux can be obtained by adjusting the hardness of oils and fats used.

A method of producing processed foods using roux using the oil and fat composition for roux of the present invention is not particularly limited, and it can be produced by a conventional known method using vegetables, meat or the like in addition to the roux of the present invention. The obtained processed food can also be used as retort food, which is instant cooked food. In addition, the obtained processed food can be widely used as bread fillings, toppings and the like.

Examples of other components used in roux include spices such as curry, cacao mass, cocoa powder, dairy products such as whole milk powder, skimmed milk powder, butter milk powder, whey powder, and yogurt powder, grains, beans, vegetables, meat, seafood, fruit, fruit juice, coffee, nut paste, vegetable proteins such as wheat proteins and soybean proteins, food ingredients such as eggs and various processed egg products, emulsifiers, thickening stabilizers, salting agents such as table salts and potassium chloride, acidifiers such as acetic acid and lactic acid, sweeteners such as sugars, sugar alcohols, stevia, and aspartame, coloring matters such as β-carotine and caramel, and antioxidants such as tocopherol and tea extracts. Such food ingredients and food additives may be used alone or two or more thereof may be used in combination.

Examples of emulsifiers include lecithin, glycerin fatty acid ester, glycerin acetic acid fatty acid ester, glycerin lactic acid fatty acid ester, glycerol succinic acid fatty acid ester, glycerine diacetyl tartaric acid fatty acid ester, sorbitan fatty acid ester, sucrose fatty acid ester, sucrose acetate isobutyrate, polyglycerin fatty acid ester, polyglycerin condensed ricinoleic acid ester, propylene glycol fatty acid ester, calcium stearoyl lactylate, sodium stearoyl lactylate, polyoxyethylene sorbitan monostearate, and polyoxyethylene sorbitan monoglyceride.

Examples of thickening stabilizers include guar gum, locust bean gum, carrageenan, arabic gum, alginates, pectin, xanthan gum, pullulan, tamarind seed gum, psyllium seed gum, crystalline cellulose, methyl cellulose, carboxymethyl cellulose, agar, glucomannan, gelatin, and starch.

### Examples

Hereinafter, the present invention will be described in more detail with reference to examples of the present invention. Here, in the examples, % and parts are both based on mass.

### (Examination 1) Comparison by types of plant oils and fats

Curry was prepared according to the formulation shown in Table 1 and o Method of producing curry, and evaluated according to o Curry texture evaluation method and criteria, and the evaluation results are shown in Table 2.

### (Fractionation of shea fat)

A raw shea butter material and acetone were mixed at a ratio of 20:80, and the mixture was stirred at 27.5°C for 30 minutes, and a gum substance was precipitated. Then, the mixture was left and the sedimented gum substance was filtered to obtain a degummed shea butter.

Subsequently, a degummed shea butter and acetone were mixed at a ratio of 18.5:81.5, the temperature was gradually lowered while stirring weakly, and when the temperature reached 2.5°C, the temperature was maintained at a certain temperature for about 30 minutes, and the obtained mixed solution was filtered to obtain a solid part (shea stearin) and a liquid part (shea olein).

### (Examination oils and fats used in Example 1)

A purified shea olein (an iodine value of 72) obtained by purifying the shea olein obtained by the fractionation by a general method was used.

### (Examination oils and fats used in Example 2)

A purified shea stearin (an iodine value of 36) obtained by purifying the shea stearin obtained by the fractionation by a general method was used.

### (Examination oils and fats used in Comparative Example 1)

"Palm Ace N" (commercially available from Fuji Oil Co., Ltd.) which is palm fractionated low-melting-point oils and fats (an iodine value of 68) was used.

### (Examination oils and fats used in Comparative Example 2)

A corn refined oil was used.

### (Examination oils and fats used in Comparative Example 3)

A purified rapeseed oil was used.

### (Examination oils and fats used in Comparative Example 4)

A soybean refined oil was used.

**[Table 1]**

| Raw material | % |
|---|---|
| Wheat flour | 30.4 |
| Curry powder | 20.4 |
| Plant oils and fats | 17.9 |
| Examination oils and fats | 17.9 |
| Sugar | 7.1 |
| Consomme | 4.5 |
| Salt | 1.8 |

### ○ Curry production method

1. Plant oils and fats, soft flour, and curry powder were heated at medium heat and stirred so that the mixture became uniform.
   For the plant oils and fats, "Parkid V" (commercially available from Fuji Oil Co., Ltd.), which is a transesterified oil using palm fractionated high-melting-point oils and fats or the like, was used.
2. Consomme, a sugar, and a salt were added to the above 1 and stirred well.
3. Examination oils and fats were added to the above 2 and stirred well to obtain a roux.
4. Dissolving in hot water was performed so that the roux content of the above 3 was 11.2 mass% and simmering was performed for 10 minutes to obtain curry.

### ○ Curry texture evaluation method and criteria

The produced curry was evaluated based on the following items.

Evaluation was performed by 10 well-trained panelists involved in the development of oils and fats, and the averaged evaluation scores were used as evaluation results. 5 points or more were satisfactory.

Here, the score of each item was set as 10 points when the beef and pork fat mixed oil was used as the examination oil and fat part.

### (Degree of full-bodied taste)

10 points: full-bodied taste was strongly perceived
5 points: full-bodied taste was perceived
3 points: full-bodied taste was weakly perceived
0 points: full-bodied taste was not perceived

### (Degree of spread of aftertaste)

10 points: the lingering flavor of oils and fats was strongly perceived in the mouth
5 points: the lingering flavor of oils and fats was perceived in the mouth
3 points: weak, but the lingering flavor of oils and fats was confirmed in the mouth
0 points: no lingering flavor of oils and fats was confirmed in the mouth, and no
lingering flavor of oils and fats was exhibited.

### (Degree of depth of taste)

10 points: depth of taste was strongly perceived
5 points: depth of taste was perceived
3 points: depth of taste was weakly perceived
0 points: depth of taste was not perceived

### (Degree of richness)

10 points: richness was strongly perceived
5 points: richness was perceived
3 points: richness was weakly perceived
0 points: richness was not perceived

### (Degree of complexity of taste)

10 points: complexity of the taste was strongly perceived
5 points: complexity of the taste was perceived
3 points: complexity of the taste was weakly perceived
0 points: complexity of the taste was not perceived

### (Degree of mellowness)

10 points: mellowness was strongly perceived
5 points: mellowness was perceived
3 points: mellowness was weakly perceived
0 points: mellowness was not perceived

**[Table 2]**

| | Example 1 | Example 2 | Comparative Example 1 | Comparative Example 2 | Comparative Example 3 | Comparative Example 4 |
|---|---|---|---|---|---|---|
| Full-bodied taste | 8.2 | 7.0 | 2.0 | 3.8 | 3.4 | 3.4 |
| Spread of aftertaste | 8.2 | 6.3 | 2.1 | 4.1 | 4.0 | 4.1 |
| Depth of taste | 7.6 | 6.0 | 2.0 | 2.8 | 3.0 | 3.1 |
| Richness | 7.8 | 6.1 | 1.4 | 3.0 | 2.2 | 2.0 |
| Complexity of taste | 7.5 | 6.0 | 1.9 | 2.9 | 3.3 | 3.1 |
| Mellowness | 7.6 | 6.1 | 2.0 | 3.4 | 2.2 | 2.0 |

### (Summary of Table 2)

- The flavor of the curry using the shea fat of Example 1 and Example 2 had better evaluation results similar to those of pork fat and beef fat compared to comparative examples.
- Comparative Example 1 to Comparative Example 4 had poor curry flavor results.
- Comparing Example 1 and Example 2, Example 1 using purified shea olein had better results than Example 2 using purified shea stearin.

### (Examination 2) Examination of flavor enhancement with flavoring with rice bran and/or aqueous phase containing yeast extract and reducing sugar

Curry was prepared according to the formulation shown in Table 1 and o Method of producing curry and evaluated according to o Curry texture evaluation method and criteria, and the evaluation results are shown in Table 4.

Examination oils and fats used in examples and comparative examples were prepared according to the following method.

### (Preparation of examination oils and fats used in Example 3)

3 mass% of rice bran and 0.3 mass% of glucose were added to purified shea olein (an iodine value of 72), and heated at 160°C for 90 minutes while stirring under a reduced pressure of about 50 mmHg. Next, the sample was cooled to 60°C and solid components were then filtered to obtain examination oils and fats A used in Example 3.

### (Preparation of examination oils and fats used in Comparative Example 5)

3 mass% of rice bran and 0.3 mass% of glucose were added to Palm Ace N (commercially available from Fuji Oil Co., Ltd.) and heated at 160°C for 90 minutes while stirring under a reduced pressure of about 50 mmHg. Next, the sample was cooled to 60°C and solid components were then filtered to obtain examination oils and fats B used in Comparative Example 5.

### (Preparation of examination oils and fats used in Example 4)

Purified shea olein (an iodine value of 72) was used as the plant oils and fats in an oil phase, and according to the formulation shown in Table 3 and o Method of preparing yeast extract-containing oil and fat composition, examination oils and fats used in Example 4 were obtained.

**[Table 3]**

| | | |
|---|---|---|
| Oil phase | Plant oils and fats | 99.910 |
| Aqueous phase | water | 0.072 |
| | yeast extract | 0.009 |
| | xylose | 0.009 |
| Sum | | 100.000 |

### o Method of preparing yeast extract-containing oil and fat composition

1. During the formulation, "Ajipulse BF" (commercially available from Mitsubishi Corporation Life Sciences Ltd.) was used as the yeast extract, and raw materials classified as the aqueous phase were mixed to prepare an aqueous phase.
2. The plant oils and fats used in the oil phase were melted.
3. The aqueous phase was added dropwise to the oil phase, emulsified with a high pressure homogenizer to obtain a water-in-oil type oil and fat composition.

### (Preparation of examination oils and fats used in Comparative Example 6)

Palm Ace N (commercially available from Fuji Oil Co., Ltd.) was used as the plant oils and fats in an oil phase, and according to the formulation shown in Table 3 and o Method of preparing yeast extract-containing oil and fat composition, examination oils and fats used in Comparative Example 6 were obtained.

### (Preparation of examination oils and fats used in Example 5)

Examination oils and fats A were used as the plant oils and fats in an oil phase, and according to the formulation shown in Table 3 and ∘ Method of preparing yeast extract-containing oil and fat composition, examination oils and fats used in Example 5 were obtained.

### (Preparation of examination oils and fats used in Example 6)

A mixed oil containing 50 parts of shea olein (an iodine value of 72) and 50 parts of examination oils and fats B was used as the plant oils and fats in an oil phase, and according to the formulation shown in Table 3 and o Method of preparing yeast extract-containing oil and fat composition, examination oils and fats used in Example 6 were obtained.

### (Preparation of examination oils and fats used in Comparative Example 7)

Examination oils and fats B were used as the plant oils and fats in an oil phase, and according to the formulation shown in Table 3 and o Method of preparing yeast extract-containing oil and fat composition, examination oils and fats used in Comparative Example 7 were obtained.

**[Table 4]**

| | Exampl e 1 | Exampl e 3 | Exampl e 4 | Exampl e 5 | Exampl e 6 | Comparativ e Example 1 | Comparativ e Example 5 | Comparativ e Example 6 | Comparativ e Example 7 |
|---|---|---|---|---|---|---|---|---|---|
| Full-bodied taste | 8.2 | 8.3 | 9.6 | 9.8 | 7.4 | 2.0 | 4.1 | 5.3 | 5.4 |
| Spread of aftertaste | 8.2 | 8.3 | 8.3 | 9.0 | 6.6 | 2.1 | 4.2 | 4.1 | 4.6 |
| Depth of taste | 7.6 | 9.6 | 9.4 | 9.8 | 7.5 | 2.0 | 5.3 | 4.4 | 5.4 |
| Richness | 7.8 | 8.7 | 9.3 | 9.7 | 7.0 | 1.4 | 4.4 | 4.3 | 4.9 |
| Complexit y of taste | 7.5 | 9.2 | 9.2 | 98 | 7.1 | 1.9 | 4.4 | 4.3 | 5.2 |
| Mellownes s | 7.6 | 8.7 | 9.0 | 9.6 | 7.5 | 2.0 | 3.9 | 4.1 | 5.2 |
| Use of shea fat | O | O | O | O | O | - | - | | |
| Flavoring treatment | - | O | | O | O | - | O | | O |
| Yeast extract addition treatment | - | - | O | O | O | - | - | O | o |

### (Summary of Table 4)

- The flavor of the curry of Example 3 had a reinforced depth of taste and the evaluation was favorable.
- Comparing Example 3 and Comparative Example 5, it became clear that the oils and fats obtained by bringing rice bran into contact with shea olein were evaluated to be better than fractionated palm oil.
- The flavor of the curry of Example 4 had a reinforced full-bodied taste in the middle stage, and the evaluation was favorable.
- Comparing Example 4 and Comparative Example 6, it became clear that the oils and fats obtained by adding a yeast extract and xylose to shea olein were evaluated to be better than fractionated palm oil.
- The flavor of the curry of Example 5 had a reinforced depth of taste and full-bodied taste in the middle stage, and the evaluation was favorable.
- According to Example 6, it became clear that a favorable flavor was obtained by combining the oils and fats obtained by bringing rice bran into contact with the oils and fats other than shea olein with shea olein.

### [Industrial Applicability]

Processed foods made from roux using the oil and fat composition for roux of the present invention can have a flavor similar to when pork fat or beef fat is used as the raw material for the oil and fat composition for roux.

## Claims

1. An oil and fat composition for roux, containing 25 to 100 mass% of a shea fat having an iodine value of 50 to 80.

2. The oil and fat composition for roux according to claim 1, which is flavored with rice bran.

3. The oil and fat composition for roux according to claim 1, which contains oils and fats flavored with rice bran.

4. The oil and fat composition for roux according to claim 1, which contains 0.01 to 1 mass% of an aqueous phase containing 0.2 to 40 mass% of a yeast extract and 0.2 to 60 mass% of a reducing sugar together.

5. The oil and fat composition for roux according to claim 2, which contains 0.01 to 1 mass% of an aqueous phase containing 0.2 to 40 mass% of a yeast extract and 0.2 to 60 mass% of a reducing sugar together.

6. The oil and fat composition for roux according to claim 3, which contains 0.01 to 1 mass% of an aqueous phase containing 0.2 to 40 mass% of a yeast extract and 0.2 to 60 mass% of a reducing sugar together.

7. An oil and fat composition for roux, containing 25 to 100 mass% of a shea fat having an iodine value of 30 to 50.

8. The oil and fat composition for roux according to claim 7, which is flavored with rice bran.

9. The oil and fat composition for roux according to claim 7, which contains oils and fats flavored with rice bran.

10. The oil and fat composition for roux according to any one of claims 7 to 9, which contains 0.01 to 1 mass% of an aqueous phase containing 0.2 to 40 mass% of a yeast extract and 0.2 to 60 mass% of a reducing sugar together.

11. A roux containing the oil and fat composition for roux according to any one of claims 1 to 6, a seasoning and cereal flour.

12. A roux containing the oil and fat composition for roux according to any one of claims 7 to 10, a seasoning and cereal flour.

13. The roux according to claim 11, which is for curry.

14. The roux according to claim 12, which is for curry.

15. A processed food, using the roux according to claim 11.

16. A processed food, using the roux according to claim 12.

17. A processed food, using the roux according to claim 13.

18. A processed food, using the roux according to claim 14.

19. A method of enhancing processed food to have a full-bodied taste, using the roux according to claim 11.

20. A method of enhancing processed food to have a full-bodied taste, using the roux according to claim 12.

21. A method of enhancing processed food to have a full-bodied taste, using the roux according to claim 13.

22. A method of enhancing processed food to have a full-bodied taste, using the roux according to claim 14.
